# EUROPÄISCHE PATENTSCHRIFT

(11) **EP 1 011 071 B1**
(45) Veröffentlichungstag und Bekanntmachung des Hinweises auf die Patenterteilung: **11.03.2009**
(21) Anmeldenummer: 99124007.8
(22) Anmeldetag: 08.12.1999
(51) Int. Cl.: G06K 19/077, G06K 19/07

(54) **Verfahren und Vorrichtung zum Herstellen von presonalisierten Chipkarten**
Method and device for manufacturing customized chip cards
Méthode et dispositif pour la fabrication de cartes à puce personnalisées

(30) Priorität: 17.12.1998 DE 19858343
(43) Veröffentlichungstag der Anmeldung: 21.06.2000
(73) Patentinhaber: Giesecke & Devrient GmbH, 81677 München (DE)
(72) Erfinder: Fischbacher, Johannes, Dr., 81827 München (DE)

(56) Entgegenhaltungen:
- WO-A-98/18106
- DE-A- 19 614 808
- LENDER F: "HERSTELLUNG, PERSONALISIERUNG UND VERSAND VON CHIPKARTEN - EIN UEBERBLICK" IT + TI INFORMATIONSTECHNIK UND TECHNISCHE INFORMATIK, OLDENBOURG VERLAG. MUNCHEN, DE, Bd. 39, Nr. 5, 1. Oktober 1997 (1997-10-01), Seiten 7-13, XP000702135 ISSN: 0944-2774

## Beschreibung

Die Erfindung betrifft ein Verfahren bzw. eine Vorrichtung zum Herstellen von personalisierten Chipkarten, welche eine zumindest teilweise ebene Oberfläche zum sichtbaren Aufbringen von Daten und einen integrierten Schaltkreis mit Speicher enthalten.

Aus der internationalen Anmeldung WO 87/ 05420 ist ein Verfahren zum Personalisieren, d.h. zum Beschreiben und Codieren mit kartenindividuellen Daten, von Chipmodulen beschrieben, welche für den Einbau in einen Kartenkörper vorgesehen sind. Das dort vorgeschlagene Verfahren sieht zunächst vor, ein Spulenband mit zu personalisierenden Chipmodulen bereitzustellen. Dieses Spulenband wird anschließend taktweise einem Kontaktierkopf zugeführt mittels dem jeweils ein Chipmodul kontaktiert und personalisiert wird. Das personalisierte Chipmodul wird entweder vor oder nach der Personalisierung in einen unbeschrifteten Kartenkörper eingebracht.

Mit dieser Form der Personalisierung stellt das Zusammenführen von Chip und Kartenkörper kein Problem dar, da jeder Chip in jeden Kartenkörper paßt. Vor allem bei der Variante, bei der ein bereits personalisierter Chip in den Kartenkörper eingebracht wird, können nicht korrekt personalisierte Chips bereits vorher ausgesondert werden, so daß ein Fehler beim Personalisieren des Chips nicht zu einer Ausschußkarte führt. Der Nachteil des dargestellten Verfahrens besteht jedoch darin, daß bei fehlerhafter späterer Personalisierung des Kartenkörpers, d.h. beim Beschriften der Karte mit den persönlichen Daten des späteren Kartenbenutzers, auch der Chip verloren ist.

Aus der europäischen Patentanmeldung EP-OS 0 266 926 ist ein Verfahren bekannt, bei dem ein nicht personalisierter Kartenkörper mit einem nicht personalisierten Magnetstreifen und einem nicht personalisierten Chip an einen Encoder zur Magnetstreifenbeschriftung geführt wird, anschließend wird die IC-Personalisierung vorgenommen, welche überprüft wird, um im nächsten Schritt die Beschriftung, d.h. die Personalisierung des Kartenkörpers vorzunehmen. Auch hier besteht wieder der Nachteil, daß durch einen Fehler beim Beschriften des Kartenkörpers die komplette Karte, inklusive Chip, unbrauchbar wird.

Eine Verringerung dieses Ausschusses wird durch die Vorgehensweise gemäß der europäischen Patentschrift EP-PS 0 311 417 erreicht, indem auch dort zwar zunächst der Chip personalisiert wird, jedoch ein Lesegerät vorgesehen ist das für die weiteren Bearbeitungsschritte, nämlich Personalisieren des Kartenkörpers und des Magnetstreifens, die Daten aus dem Chip ausgelesen werden, um sie für die Hochprägung und Magnetstreifencodierung zu verwenden. Auf diese Weise kann zumindest erreicht werden, daß bei der Beschriftung des Kartenkörpers nicht die falsche Zuordnung getroffen wird, so daß es nur schwer möglich ist daß die im Chip abgelegten Daten und die auf der Chipkartenoberfläche dargestellten Daten nicht übereinstimmen. Es bleibt aber weiterhin ein Nachteil bestehen, indem die Beschriftung des Kartenkörpers zwar mit den richtigen Daten erfolgt jedoch die Beschriftung aus anderen Gründen, z.B. Verschmutzung der Kartenoberfläche oder ähnliches, nicht erfolgreich durchgeführt werden kann.

XP-000702135 (it+ti 5/97: Seite 7-13) gibt einen Überblick über wesentliche Herstellungsprozesse, Personalisierung und Versand von Chipkarten. Verschiedene Personalisierungsmethoden werden vorgestellt und deren Vor- und Nachteile betrachtet. DE 196 14 808 und WO/9818106 offenbaren Verfahrens zur Personalisierung von Karten duch Einschreiben von Daten in den Chip und durch Beschriftung der Karte. Diese Dokumente offenbaren nicht die integrierten Schaltkreise und die Kartenkörper getrennt voneinander zu personalisieren und anschließend den personalisierten Schaltkreis in den personalisierten Kartenkörper einzubringen.

Aufgabe der Erfindung ist es deshalb, ein Verfahren und eine Vorrichtung anzugeben, mit der die oben genannten Nachteile vermieden werden, d.h. die Ausschußrate beim Personalisieren von Chipkarten weiter verringert wird.

Diese Aufgabe wird mit einem Verfahren gemäß Anspruch 1 bzw. einer Vorrichtung gemäß Anspruch 11 gelöst. Vorteilhafte Ausgestaltungen der Erfindung sind in den abhängigen Ansprüchen angegeben.

Gemäß Anspruch 1 wird vorgesehen, die integrierten Schaltkreise und die Kartenkörper getrennt voneinander zu personalisieren und anschließend den personalisierten Schaltkreis in den personalisierten Kartenkörper einzubringen.

Dieses Verfahren hat den Vorteil, daß der Ausschuß gegenüber dem bekannten Verfahren minimiert werden kann, da sowohl Fehler beim Personalisieren des Chips als auch Fehler bei der Personalisierung des Kartenkörpers jeweils auf den Chip bzw. Kartenkörper begrenzt bleiben. Es ist somit nicht die gesamte Karte unbrauchbar, wenn nur entweder der Kartenkörper oder der Chip nicht fehlerfrei personalisiert sind. Ein weiterer Vorteil ergibt sich aus dem nunmehr möglichen stückgenauen Einbau der Chips bzw. Module in den Kartenkörper, was zu einer weiteren Kostensenkung bei der Herstellung beiträgt.

Zum einfacheren Handling werden die integrierten Schaltkreise in Module eingebettet auf einem Trägerband einer Kontaktstation zugeführt. Vorzugsweise handelt es sich bei der Kontaktstation um eine Multikontaktstation, bei der das Testen und/oder Initialisieren und Personalisieren mehrerer Module gleichzeitig möglich ist. Auf diese Weise wird erreicht, daß die empfindlichen integrierten Schaltkreise in diesem Fertigungsschritt, d.h. bei der Kontaktierung bereits von einer Modulmasse umgeben sind, so daß der integrierte Schaltkreis selbst bereits geschützt ist. Das Initialisieren entfällt, wenn bereits am Trägerband vorinitialisierte Chips bzw. Module verwendet werden.

Vorteilhafterweise wird nach dem Personalisieren der integrierten Schaltkreise ein weiterer Test durchgeführt, um vor der weiteren Verarbeitung fehlerhaft initialisierte bzw. personalisierte Schaltkreise aussondern zu können. Alternativ kann der integrierte Schaltkreis selbst eine Fehlermeldung nach außen geben, um eine fehlerhafte Personalisierung anzuzeigen.

Nach dem Personalisieren wird das Modulträgerband bevorzugt an eine Stanzvorrichtung weitertransportiert, in der die Module aus dem Trägerband gestanzt werden, woraufhin sie zum Einsetzen in den Kartenkörper an eine Implantiervorrichtung übergeben werden. In vorteilhafter Weise kann der Chip vor dem Stanzen nochmals ausgelesen werden, so daß bei einer vorausgegangenen Störung der personalisierte Chip eindeutig identifiziert werden kann.

Gemäß einer vorteilhaften Ausgestaltung der Erfindung werden die Kartenrohlinge gleichzeitig mit der Personalisierung der Module in einen codierten Werkstückträger aufgelegt wobei der Code mit der Reihenfolge der erfolgreich personalisierten Schaltkreise verknüpft wird, so daß die Kartenkörper in der Reihenfolge personalisiert werden, wie personalisierte Schaltkreise bzw. Module vorliegen.

Bei Chipkarten, welche auch noch einen Magnetstreifen enthalten, kann vor oder nach dem Personalisieren des Kartenkörpers auch der Magnetstreifen mit persönlichen Daten beschrieben werden. Die Magnetstreifencodierung wird nach dem Personalisieren sofort gegengelesen und überprüft. Fehlerhafte codierte Kartenkörper werden ausgesondert und nicht mit einem Chip bzw. Modul versehen. Eine Nachcodierung kann sofort mit dem nächstfolgenden Kartenkörper erfolgen, so daß die Reihenfolge mit den personalisierten Chips weiterhin übereinstimmt. Bei nicht unmittelbar folgender Nachcodierung werden die personalisierten Kartenkörper mit Hilfe eines Sortierpuffers in die Reihenfolge der personalisierten Schaltkreise gebracht.

Um fehlerhaft personalisierte Schaltkreise bzw. Kartenkörper auszusondern, wird nach dem Einsetzen des personalisierten Schaltkreises in den personalisierten Kartenkörper eine Überprüfung der richtigen Zuordnung durchgeführt.

Vorzugsweise werden die vollständig personalisierten Chipkarten danach in einen Sortierpuffer abgelegt und anschließend in einem Magazin gestapelt. Die Ablage im Sortierpuffer erfolgt in einer durch die Datensätze vorgegebenen Reihenfolge, welche beispielsweise durch den Auftraggeber vorgegeben wird.

Der unabhängige Anspruch 11 gibt eine Vorrichtung zum Herstellen personalisierter Datenträger nach dem oben genannten Verfahren an, und weist eine Multikontaktstation auf, in der die integrierten Schaltkreise einem Eingangstest unterzogen werden, d.h. es wird die Funktionalität getestet. Anschließend werden die Chips bzw. Module initialisiert, soweit nicht bereits vorinitialisierte Chips verwendet wurden, und personalisiert. Die integrierten Schaltkreise sind dabei auf einem Trägerband angeordnet, mit dem sie der Multikontaktstation zugeführt werden bzw. im Anschluß an die Personalisierung und gegebenenfalls einer Überprüfung der richtigen Personalisierung an eine Stanzvorrichtung transportiert werden.

Parallel dazu ist eine Magazineingabevorrichtung vorgesehen, welche nicht personalisierte Kartenkörper auf dem codierten Werkstückträger anordnet. Die Vorrichtung enthält weiterhin Mittel zur Identifizierung des Werkstückträgercodes und zur Zuordnung dieser Codes zu einem Personalisierungsdatensatz, mit dem der Kartenkörper schließlich personalisiert wird. In einer Vorrichtung zum Implantieren der personalisierten integrierten Schaltkreise werden diese in den personalisierten Kartenkörper eingebracht.

In vorteilhafter Weise wird weiterhin eine Prüfvorrichtung angeordnet, welche nach der Implantierung der integrierten Schaltkreise bzw. Module in den Kartenkörper eine Überprüfung auf Übereinstimmung der Daten vornimmt. Anstelle oder zusätzlich zur Überprüfung auf Datenübereinstimmung kann der Schaltkreis an dieser Stelle auf seine Funktionsfähigkeit geprüft werden, um Beschädigungen der IC's durch die Implantation zu erkennen.

Schließlich ist ein Sortierpuffer vorgesehen, in den die fertigen Karten in einer vorgegebenen Reihenfolge abgelegt und in ein Magazin abgestapelt werden. Auf diese Weise wird erreicht daß die Karten in einer für die spätere Bearbeitung gewünschten Reihenfolge im Magazin abgelegt werden können.

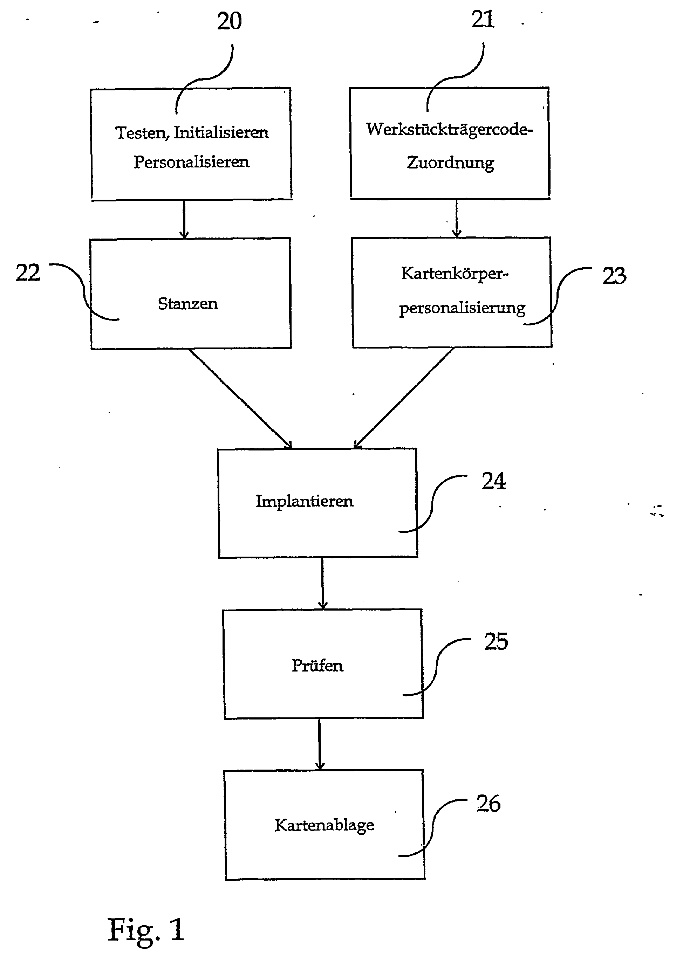

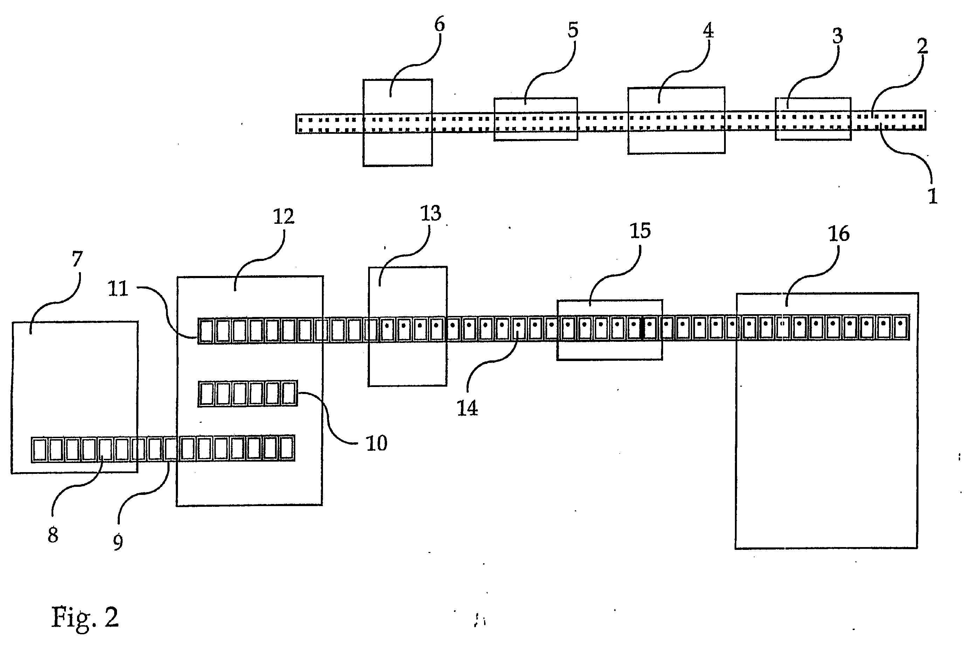

Im folgenden wird die Erfindung ohne Beschränkung der Allgemeinheit anhand der Ausführungsbeispiele gemäß den Fig. 1 und 2 näher erläutert.

Es zeigen:
Fig. 1 ein Ablaufdiagramm des erfindungsgemäßen Verfahrens, und
Fig. 2 eine Vorrichtung zur Durchführung dieses Verfahrens.

Fig. 1 zeigt ein Ablauf diagramm, welches die erfindungsgemäße Produktionsreihenfolge bei der Herstellung von personalisierten Chipkarten angibt.

Im ersten Verfahrensschritt 20 werden die integrierten Schaltkreise bzw. die Module, welche die integrierten Schaltkreise beinhalten in einer Multikontaktstation einem Eingangstest unterzogen. Im Anschluß daran werden die als gut erkannten Chips gegebenenfalls initialisiert und personalisiert. Bei der Personalisierung werden den einzelnen Chips kartenindividuelle Datensätze in einer vorgegebenen Reihenfolge zugeordnet. Die Personalisierung nach dem Test und der Initialisierung gewährleistet, daß die Fehlerquote bei der Personalisierung, welche durch Chipdefekte bzw. Kontaktprobleme verursacht wird, sehr gering ist.

Im nächsten Schritt 22 werden die integrierten Schaltkreise bzw. Module auf dem Trägerband, auf dem sie zum Transport angeordnet sind, ausgestanzt. Vor dem Stanzen kann in vorteilhafter Weise ein Abgleichkriterium aus dem Chip gelesen werden, um im Störungsfall die Synchronität in der Personalisierung der Chipmodule und Kartenkörper wiederherzustellen.

Parallel dazu werden im Schritt 21 unbeschriftete Kartenkörper mit einer Aussparung für das Modul bzw. den integrierten Schaltkreise in einen codierten Werkstückträger abgelegt. Dem in Schritt 20 personalisierten Modul wird jeweils ein Code des Werkstückträgers zugeordnet.

Dieser Code wird im nächsten Schritt 23 bei der Kartenkörper-Personalisierung ausgewertet, so daß der dem Code des Werkstückträgers zugeordnete Datensatz für die Personalisierung des Kartenkörpers verwendet werden kann. Für den Fall, daß die Chipkarte zusätzliche Magnetstreifen enthält, erfolgt vorzugsweise zeitlich nach der Chip-Personalisierung in der Reihenfolge der erfolgreich personalisierten Chips die Magnetstreifencodierung. Die Magnetstreifencodierung wird vorzugsweise vor der optischen Codierung durchgeführt.

Im nächsten Schritt 24 werden die erfolgreich personalisierten Module in der richtigen Reihenfolge in die erfolgreich personalisierten Kartenkörper implantiert.

Schritt 25 sieht daraufhin beispielsweise mit Hilfe des gelesenenen Werkstückträgercodes eine Überprüfung vor, mit der festgestellt werden kann, ob die personalisierten Module den personalisierten Kartenkörpern richtig zugeordnet wurden bzw. der Chip beim Implantieren nicht beschädigt wurde.

Schließlich werden in Schritt 26 die Karten in der bzw. einer vorgegebenen Reihenfolge in ein Magazin abgelegt.

Die Fig. 2 zeigt eine Vorrichtung, mit der in vorteilhafter Weise das erfindungsgemäße Verfahren angewendet werden kann. Es wird ein spulenförmig aufgerolltes Trägerband 1, auf dem die integrierten Schaltkreise 2 vorzugsweise zweireihig angeordnet sind, zum Transport der Schaltkreise bzw. der Module verwendet. In der Station 3 wird überprüft, ob das Trägerband korrekt mit den Modulen bestückt ist. Weiterhin wird in dieser Station eine Schlechtlocherkennung durchgeführt, d.h. es wird überprüft, ob die Chips bzw. Module bereits bei einem vorgeschaltetem Test als fehlerhaft gekennzeichnet wurden, um eine Korrektur bei der späteren Personalisierung vornehmen zu können.

In der Multikontaktstation 4 werden die Module zunächst einem Funktionstest unterzogen. In dieser Station kann eine vorgegebene Anzahl von Modulen gleichzeitig kontaktiert und damit bearbeitet werden. Die als gut getesteten Schaltkreise werden gegebenenfalls anschließend initialisiert, woraufhin die erfolgreich initialisierten Module mit den kartenindividuellen Datensätzen versehen, d.h. personalisiert werden.

Im weiteren werden die personalisierten Module 2 einer optional angeordneten Auslesestation 5 zugeführt, mit der die Fehlerfreiheit nochmals überprüft wird, bevor die Module in der Stanzeinrichtung 6 ausgestanzt und an die Implantiervorrichtung 13 weitergegeben werden.

Parallel zur Personalisierung der Module werden in der Magazineingabevorrichtung 7 die virginalen Kartenkörper 8 zur Verfügung gestellt. Sie werden auf einen Werkstückträger 9 aufgebracht der mit einer Codierung versehen ist. Jeder codierte Werkstückträger wird einem erfolgreich personalisierten Modul zugeordnet, so daß die Personalisierung der Kartenkörper in der Personalisierungvorrichtung 12 in der Reihenfolge der erfolgreich personalisierten Module vorgenommen werden kann.

Zur Personalisierung werden die virginalen Kartenkörper vom Magazin 7 auf dem codierten Werkstückträger 9 zur Personalisierungsvorrichtung 12 transportiert. Auf dem Weg dorthin kann ggf. eine Prüfvorrichtung angeordnet sein, mit der die Kartenkörper z.B. optisch auf Fehler untersucht werden. In der Personalisierungsvorrichtung 12 werden die Kartenkörper einzeln oder in einer Gruppe 10 zusammengefaßt entsprechend der Werkstückträgercodierung mit dem zugeordneten Datensatz personalisiert.

Im Anschluß daran werden die Werkstückträger mit den personalisierten Kartenkörpern auf das Trägerband 11 geführt und der Implantiervorrichtung 13 zugeführt. Dort werden die personalisierten Module in die personalisierten Kartenkörper eingesetzt. Die fertiggestellten Chipkarten 14 werden zur abschließenden Prüfung auf die richtige Komplettpersonalisierung einer Überprüfungsvorrichtung 15 zugeführt, in der die im Chip abgelegten Daten ausgelesen und mit den auf dem Kartenkörper aufgebrachten Personalisierungsdaten und/oder dem Werkstückträgercode verglichen werden. Zur Überprüfung der Daten kann beispielsweise eine Bildaufnahmeeinheit mit Texterkennung oder Barcodelesung zur Erfassung der auf der Kartenoberfläche aufgebrachten Daten eingesetzt werden.

Fehlerhafte Karten werden durch eine Einheit 16 ausgesondert und es wird eine Nachpersonalisierung für den jeweils betroffenen Datensatz initialisiert.

Schließlich werden die getesteten Karten einem Sortierpuffer zugeführt, der die fertiggestellten Chipkarten in einer durch die Datensätze vorgegebenen Reihenfolge in einem Magazin ablegt.

Für den Fall, daß die fertige Chipkarte auch einen Magnetstreifen enthalten soll, kann in der Personalisierungsvorrichtung 12 auch eine Vorrichtung zur Personalisierung des Magnetstreifens angeordnet sein.

## Patentansprüche

1. Verfahren zum Herstellen von personalisierten Chipkarten welche eine zumindest teilweise ebene Oberfläche zum sichtbaren Aufbringen von Daten und einen integrierten Schaltkreis (2) mit Speicher enthalten, wobei die im Speicher abgelegten Daten und die sichtbar auf den Kartenkörper (8) aufgebrachten Daten korreliert sind,
**dadurch gekennzeichnet daß**
die integrierten Schaltkreise (2) und die Kartenkörper (8) getrennt voneinander personalisiert werden und anschließend der personalisierte Schaltkreis (2) in den personalisierten Kartenkörper (8) eingebracht wird.

2. Verfahren nach Anspruch 1, **dadurch gekennzeichnet, daß**
die integrierten Schaltkreise (2) in Module eingebettet und auf einem Trägerband (11) angeordnet sind, mittels dem sie einer Multikontaktstation (4) zugeführt werden, in der eine vorgegebene Anzahl von Modulen gleichzeitig getestet, initialisiert und personalisiert werden.

3. Verfahren nach Anspruch 2, **dadurch gekennzeichnet, daß**
die Schaltkreise (2) nach dem Personalisieren nochmals getestet werden.

4. Verfahren nach einem der vorhergehenden Ansprüche, **dadurch gekennzeichnet, daß** das Modulträgerband an eine Stanzvorrichtung (6) weitertransportiert wird, die Module aus dem Trägerband (11) gestanzt werden und an eine Implantiervorrichtung (13) zum Einsetzen in den Kartenkörper (8) weitergeleitet werden.

5. Verfahren nach einem der Ansprüche 1 bis 4, **dadurch gekennzeichnet, daß** vor dem Personalisieren die Kartenrohlinge auf einen Werkstückträger (9) aufgelegt werden, welcher mit einem Code versehen ist, der in der Reihenfolge der erfolgreich personalisierten Schaltkreise (2) den Personalisierungsdatensätzen zugeordnet wird und die Kartenkörper (8) in der Reihenfolge personalisiert werden, wie personalisierte Schaltkreise vorliegen.

6. Verfahren nach einem der Ansprüche 1 bis 5, **dadurch gekennzeichnet, daß** vor oder nach der Personalisierung des Kartenkörpers (8) ein Magnetstreifen mit persönlichen Daten beschrieben wird.

7. Verfahren nach einem der Ansprüche 1 bis 6, **dadurch gekennzeichnet, daß** nach dem Einsetzen des personalisierten Schaltkreises (2) in den personalisierten Kartenkörper (8) eine Überprüfung der richtigen Zuordnung und/oder ein Funktionstest der Chips bzw. Module durchgeführt wird.

8. Verfahren nach Anspruch 7, **dadurch gekennzeichnet, daß** zur Überprüfung Daten aus dem Chip ausgelesen und auf die richtige Zuordnung zum Werkstückträgercode hin kontrolliert werden.

9. Verfahren nach Anspruch 7, **dadurch gekennzeichnet, daß** zur Überprüfung Daten aus dem Chip ausgelesen und mit den auf der Kartenoberfläche aufgebrachten Daten verglichen werden.

10. Verfahren nach einem der Ansprüche 1 bis 9, **dadurch gekennzeichnet, daß** die vollständig personalisierten Datenträger in der durch die Datensätze vorgegebenen Reihenfolge in einem Sortierpuffer abgelegt und anschließend in einem Magazin abgestapelt werden.

11. Vorrichtung zum Herstellen personalisierter Datenträger nach dem Verfahren gemäß den Ansprüchen 1 bis 10, **gekennzeichnet durch** ein Trägerband (1) zum Zuführen der integrierten Schaltkreise bzw. Module (2), welche die integrierten Schaltkreise tragen,
eine Multikontaktstation (4) zum Testen, Initialisieren und Personalisieren von integrierten Schaltkreisen,
eine Stanzvorrichtung (6) zum Ausstanzen der personalisierten Schaltkreise bzw. Module (2),
eine Magazineingabevorrichtung (7) zur Aufnahme und Weiterleitung nicht personalisierter Kartenkörper (8) an codierte Werkstückträger (9),
Mittel zur Identifizierung der Werkstückträgercodes und Zuordnung dieser Codes zu einem Personalisierungsdatensatz
eine Vorrichtung zum Implantieren (13) den personalisierten integrierten Schaltkreise in die personalisierten Kartenkörper (8).

12. Vorrichtung nach Anspruch 11, **gekennzeichnet durch**
eine Prüfvorrichtung (15), welche nach der Implantierung der integrierten Schaltkreise bzw. Module (2) in den Kartenkörper (8) überprüft, ob die Daten des Kartenkörpers (8) mit den im Chip abgelegten Daten übereinstimmen.

13. Vorrichtung nach Anspruch 12, **dadurch gekennzeichnet, daß** die
Prüfvorrichtung (15) eine Kontakteinheit zum Auslesen der Daten aus dem Chip und eine Einheit zum Auslesen des Werkstückträgercodes sowie eine Vergleichsvorrichtung zur Bestimmung der Zusammengehörigkeit von Chipdaten und Werkstückträgercode enthält.

14. Vorrichtung nach Anspruch 12, **dadurch gekennzeichnet, daß** die
Prüfvorrichtung (15) eine Kontaktiereinheit zum Auslesen der Daten aus dem Chip und eine Bildaufnahme- und Verarbeitungseinheit zur Bestimmung der auf dem Kartenkörper (8) aufgebrachten Daten enthält.

15. Vorrichtung nach einem der Ansprüche 11 bis 14, **gekennzeichnet durch** einen Sortierpuffer in den die fertigen Karten in der vorgegebenen Reihenfolge abgelegt und in ein Magazin abgestapelt werden.

## Claims

1. A method for producing personalized chip cards containing an at least partly flat surface for visible application of data and an integrated circuit (2) with memory, the data stored in the memory being correlated with the data visibly applied to the card body (8),
**characterized in that** the integrated circuits (2) and the card bodies (8) are personalized separately from each other and the personalized circuit (2) is subsequently incorporated in the personalized card body (8).

2. The method according to claim 1, **characterized in that** the integrated circuits (2) are embedded in modules and disposed on a carrier band (11) by means of which they are supplied to a multicontact station (4) in which a given number of modules are simultaneously tested, initialized and personalized.

3. The method according to claim 2, **characterized in that** the circuits (2) are tested again after personalizing.

4. The method according to any of the above claims, **characterized in that** the module carrier band is transported further to a punching apparatus (6), the modules are punched out of the carrier band (11) and passed on to an implanting apparatus (13) for insertion into the card body (8).

5. The method according to any of claims 1 to 4, **characterized in that**, before personalization, the card blanks are placed on a workpiece support (9) which is provided with a code which is allocated to the personalizing data records in the order of successfully personalized circuits (2), and the card bodies (8) are personalized in the order in which personalized circuits are present.

6. The method according to any of claims 1 to 5, **characterized in that** a magnetic stripe is inscribed with personal data before or after personalization of the card body (8).

7. The method according to any of claims 1 to 6, **characterized in that** a check of proper allocation and/or a functional test of the chips or modules is performed after insertion of the personalized circuit (2) into the personalized card body (8).

8. The method according to claim 7, **characterized in that**, for the check, data are read out of the chip and checked for proper allocation to the workpiece support code.

9. The method according to claim 7, **characterized in that**, for the check, data are read out of the chip and compared with the data applied to the card surface.

10. The method according to any of claims 1 to 9, **characterized in that** the completely personalized data carriers are deposited in a sort buffer in the order given by the data records, and subsequently stacked in a magazine.

11. An apparatus for producing personalized data carriers by the method according to claims 1 to 10, **characterized by**
a carrier band (1) for supplying the integrated circuits or modules (2) carrying the integrated circuits,
a multicontact station (4) for testing, initializing and personalizing integrated circuits,
a punching apparatus (6) for punching out the personalized circuits or modules (2),
a magazine input apparatus (7) for receiving and passing unpersonalized card bodies (8) on to encoded workpiece supports (9),
means for identifying the workpiece support codes and allocating said codes to a personalizing data record,
an apparatus for implanting (13) the personalized integrated circuits in the personalized card bodies (8).

12. The apparatus according to claim 11, **characterized by**
a testing apparatus (15) which, after implantation of the integrated circuits or modules (2) in the card body (8), checks whether the data of the card body (8) match the data stored in the chip.

13. The apparatus according to claim 12, **characterized in that** the testing apparatus (15) contains a contact unit for reading out the data from the chip and a unit for reading out the workpiece support code and a comparing apparatus for determining the correlation of chip data and workpiece support code.

14. The apparatus according to claim 12, **characterized in that** the testing apparatus (15) contains a contacting unit for reading out the data from the chip and an image capturing and processing unit for determining the data applied to the card body (8).

15. The apparatus according to any of claims 11 to 14, **characterized by** a sort buffer in which the finished cards are deposited in the given order and stacked in a magazine.

## Revendications

1. Procédé de production de cartes à puce personnalisées qui comportent une surface au moins partiellement plane pour l'application visible de données et un circuit intégré (2) avec mémoire, les données stockées dans la mémoire et les données visiblement appliquées sur le corps de carte (8) étant corrélées, procédé **caractérisé en ce que**
les circuits intégrés (2) et les corps de carte (8) sont personnalisés séparément les uns des autres et **en ce que** le circuit personnalisé (2) est ensuite inséré dans le corps de carte (8) personnalisé.

2. Procédé selon la revendication 1, **caractérisé en ce que** les circuits intégrés (2) sont insérés dans des modules et disposés sur une bande support (11) au moyen de laquelle ils sont acheminés vers une station multi-contact (4) dans laquelle un nombre prédéterminé de modules sont simultanément testés, initialisés et personnalisés.

3. Procédé selon la revendication 2, **caractérisé en ce que** les circuits (2) sont encore une fois testés après la personnalisation.

4. Procédé selon l'une des revendications précédentes, **caractérisé en ce que** la bande support pourvue des modules est ensuite acheminée jusqu'à un dispositif de découpage (6), et **en ce que** les modules sont découpés à partir de la bande support (11) puis amenés à un dispositif d'implantation (13) pour être insérés dans le corps de carte (8).

5. Procédé selon l'une des revendications de 1 à 4, **caractérisé en ce que** les cartes vierges sont placées sur un porte-pièce (9) avant la personnalisation, ce porte-pièce étant pourvu d'un code qui est affecté aux jeux de données de personnalisation dans l'ordre des circuits (2) personnalisés avec succès, et **en ce que** les corps de carte (8) sont personnalisés dans l'ordre dans lequel se trouvent les circuits personnalisés.

6. Procédé selon l'une des revendications de 1 à 5, **caractérisé en ce que** des données personnelles sont enregistrées sur un ruban magnétique avant ou après la personnalisation du corps de carte (8).

7. Procédé selon l'une des revendications de 1 à 6, **caractérisé en ce qu'**une vérification de la bonne affectation et/ou un test de fonctionnement des puces ou des modules est effectué après placement du circuit personnalisé (2) dans le corps de carte (8) personnalisé.

8. Procédé selon la revendication 7, **caractérisé en ce que**, à des fins de vérification, des données sont extraites de la puce et qu'il est contrôlé qu'elles sont correctement affectées au code du porte-pièce.

9. Procédé selon la revendication 7, **caractérisé en ce que**, à des fins de vérification, des données sont extraites de la puce et comparées avec les données appliquées sur la surface de la carte.

10. Procédé selon l'une des revendications de 1 à 9, **caractérisé en ce que** les supports de données entièrement personnalisés sont déposés dans un tampon de tri dans l'ordre prédéterminé par les jeux de données, puis empilés dans un magasin.

11. Dispositif destiné à la production de supports de données personnalisés selon le procédé conforme aux revendications de 1 à 10, **caractérisé par** une bande support (1) destinée à acheminer les circuits intégrés ou les modules (2) portant les circuits intégrés,
par une station multi-contact (4) destinée à tester, à initialiser et à personnaliser des circuits intégrés,
par un dispositif de découpage (6) destiné à découper les circuits personnalisés ou les modules (2),
par un dispositif d'entrée magasin (7) destiné à la réception de corps de cartes (8) non personnalisés et à leur acheminement à des portes-pièces (9) codés, par des moyens d'identification des codes de portes-pièces et par l'affectation de ces codes à un jeu de données de personnalisation,
par un dispositif (13) destiné à implanter les circuits intégrés personnalisés dans les corps de cartes (8) personnalisés.

12. Dispositif selon la revendication 11, **caractérisé par** un dispositif de contrôle (15) qui vérifie après l'implantation des circuits intégrés ou des modules (2) dans le corps de carte (8) si les données du corps de carte (8) concordent avec les données déposées dans la puce.

13. Dispositif selon la revendication 12, **caractérisé en ce que** le dispositif de contrôle (15) comporte une unité de contact destinée à lire les données de la puce et une unité destinée à lire le code de porte-pièce ainsi qu'un dispositif de comparaison destiné à déterminer la correspondance entre les données de la puce et le code du porte-pièce.

14. Dispositif selon la revendication 12, **caractérisé en ce que** le dispositif de contrôle (15) comporte une unité de mise en contact pour la lecture des données de la puce et une unité d'enregistrement d'image et de traitement pour la détermination des données appliquées sur le corps de carte (8).

15. Dispositif selon une des revendications de 11 à 14, **caractérisé par** un tampon de tri dans lequel les cartes finies sont déposées dans l'ordre prédéterminé et empilées dans un magasin.
